# EUROPEAN PATENT APPLICATION

(11) **EP 0 794 652 A2**
(43) Date of publication of application: **10.09.1997**
(21) Application number: 97100635.8
(22) Date of filing: 16.01.1997
(51) Int. Cl.: H04N 1/04

(54) **Gray reflector for document scanner or copier**

(30) Priority: 04.03.1996 US 610032
(71) Applicant: HEWLETT-PACKARD COMPANY, Palo Alto, California 94304-1181 (US)
(72) Inventor: Graham, James J., Fort Collins, CO 80525 (US); Veazey, Judson, Fort Collins, CO 80525 (US); Dawe, Julie T., Fort Collins, CO 80525 (US)
(74) Representative: Schoppe, Fritz, Dipl.-Ing.

(57) **Abstract**

A reflective surface (114) behind an image to be scanned on an optical image scanner, copier, facsimile machine or similar device. The reflective surface has a reflectance less than 90% with a preferred reflectance range of 60% to 75%. This gray surface substantially reduces image bleed-through while resulting in an acceptable level of color shift and an acceptable loss of dynamic range relative to a white surface.

## Description

### FIELD OF INVENTION

This invention relates generally to scanners, copiers, facsimile machines and other devices used for transforming an optical image of a document into a electronic signal and more specifically to design parameters for a reflective surface used behind an document to be imaged.

### BACKGROUND OF THE INVENTION

Electronic document scanners, copiers, and facsimile machines transform an optical image of a document into an electric signal suitable for storing, displaying, printing or electronic transmission. Documents to be scanned may generally be classified as either transparent or opaque. For opaque documents, light is reflected off an image on the surface of the document onto a photosensitive transducer, typically a photoconductive drum or an array of photosensitive sensor elements. However, documents are rarely completely opaque. In a typical device, some light passes through the document to a secondary reflective surface, for example a lid or automatic document feeder. Some light then reflects off the secondary reflective surface and passes back through the document a second time. The light that passes through the document twice may also be detected by the photosensitive transducer. If the document has an image on both sides, the image adjacent to the secondary reflective surface may be partially imaged onto the photosensitive transducer. For example, when copying double sided documents, sometimes an image on the back of the document partially appears in the resulting copy. This undesirable result is often called "bleed-through." There is a need for reduction of bleed-through in copiers, scanners, facsimile machines and similar devices.

### SUMMARY OF THE INVENTION

A secondary reflective surface is provided that results in an acceptable compromise between bleed-through and other image parameters of interest such as brightness, contrast and color shift. Preferably, the secondary reflective surface has a reflectance between 60% and 75%.

### BRIEF DESCRIPTION OF THE DRAWINGS

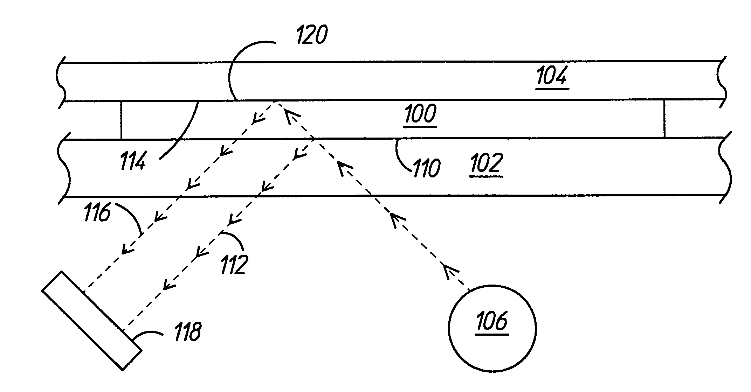

The figure is a cross section of an imaging device including a secondary reflective surface in accordance with the invention.

### DETAILED DESCRIPTION OF THE PREFERRED EMBODIMENT OF THE INVENTION

The figure illustrates a document 100, laying face down on a transparent platen 102, with a lid or automatic document feeder 104. The document 100 has an image on a front face 110, an perhaps a second image on a back face 120. The lid or automatic document feeder 104 provides a secondary reflective surface 114. A lamp 106 provides light rays 108. Most of the light rays 108 reflect off the front face 110 of the document 100, generating front reflected light rays 112. Some of the light rays 108 pass through the document 100, reflect off of the secondary reflective surface 114, passing through the second image on the back face 120 of the document, and back through the document 100, generating secondary reflected light rays 116. Both light rays 112 and 116 are received and transformed by a photosensitive transducer 118. Transducer 118 may be a photosensitive drum or an array of photosensitive elements or a single light beam may be scanned and reflected onto a single sensor. The figure is simplified in that scanning devices typically include lenses, mirrors and other optical components not relevant to the invention.

The secondary reflected light rays 116 are of particular concern when scanning or copying color images, where accurate (as perceived by the human visual system) color reproduction is needed. One way to eliminate secondary reflected light rays and resulting bleed-through is to make surface 114 non-reflective (black). However, a black surface may create other undesirable effects as follows. First, consider dynamic range (or contrast) of an image, which is the difference in reflectance between the darkest part of the image (sometimes called shadow) and the lightest part of the image (sometimes called highlight). Document 100 is typically paper. If light is permitted to reflect back through the light areas of an image, the light areas appear to be whiter, increasing the effective dynamic range. For an extreme example, consider an image on thin tissue paper. When viewed on a white background, the light areas of the image will appear white. When viewed on a black background, the light areas will shift toward gray, reducing the dynamic range of the image. Second, a black background can cause a color shift. White paper typically acts as an optical filter, suppressing short wavelengths and passing long wavelengths. That is, white paper typically has a higher transmission for red and green wavelengths than for blue wavelengths. Again, using the extreme example of an image on thin tissue paper, when viewed on a white background, reds and greens appear relatively saturated and bright. When viewed on a black background, reds and greens appear less saturated. Subjectively, red tends to appear relatively dull or brick colored. Therefore, for both dynamic range and color shift reasons, a completely non-reflective surface 114 is not preferred.

In general, a secondary reflectance below about 30% may result in perceptible color shift and reduced dynamic range in typical color images on typical white paper. Preferably, the secondary reflectance should be at least 60% for subjectively acceptable color shift and dynamic range. At the other extreme, a reflectance greater than 90% may result in noticeable bleed-through on typical double-sided paper documents. A reflectance of less than 75% is desirable to reduce bleed-through. Therefore, a preferred range is reflectance in the range from 60% to 75% as an acceptable compromise, substantially reducing bleed-through but resulting in an acceptable reduction in dynamic range and an acceptable shift in perceived color.

Many commercial products are made from molded plastic in a tan or gray color that falls in the range of 60%-75% reflectance. Typically, copier lids and scanner lids have a separate white surface or are painted white. In accordance with the discussion above, in many cases it may be preferable to simply use the product plastic color with no modification, eliminating additional manufacturing cost. In addition, in scanners and other devices using arrays of charge-coupled devices, there is often a calibration strip used to measure sensor non-uniformity. The primary requirement for these calibration strips is for uniformity along the strip (and perhaps a consistent reflectivity among different strips). The cosmetic color requirements for plastic cases are often sufficient to permit use of the plastic case with no modification as a sensor uniformity calibration strip. Therefore, an unpainted lid may also provide uniformity calibration.

The foregoing description of the present invention has been presented for purposes of illustration and description. It is not intended to be exhaustive or to limit the invention to the precise form disclosed, and other modifications and variations may be possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. A device for electronically transforming a first image into an electronic signal, the device comprising:
an area adapted to receive a document, the document having the first image on a first side (110) and a second image on a second side (120);
a reflective surface (114) adjacent to the second side of the document; and
the reflective surface having a reflectance less than 90%, thereby reducing any electronic transformation of the second image by the device when transforming the first image.

2. The device of claim 1, the reflective surface (114) having a reflectance less than 75%.

3. The device of claim 2, the reflective surface (114) having a reflectance greater than 60%.
